# FASCICULE DE BREVET EUROPEEN

(11) **EP 1 055 843 B1**
(45) Date de publication et mention de la délivrance du brevet: **21.01.2004**
(21) Numéro de dépôt: 00440138.6
(22) Date de dépôt: 12.05.2000
(51) Int. Cl.: F16H 7/08, F16H 7/12, A01D 34/76

(54) **Tendeur de courroie**
Riemenspannvorrichtung
Belt tensioner

(30) Priorité: 26.05.1999 FR 9906746
(43) Date de publication de la demande: 29.11.2000
(73) Titulaire: KUHN S.A., 67706 Saverne Cedex (FR)
(72) Inventeur: Walch, Martin, 67490 Dettwiller (FR); Wattron, Bernard, 67700 Haegen (FR)

(56) Documents cités:
- EP-A- 0 291 254
- DE-A- 2 707 030
- FR-A- 2 317 869
- US-A- 5 012 632

## Description

La présente invention se rapporte au domaine technique des machines agricoles et en particulier à des machines de coupe.

L'invention concerne une machine agricole comportant:
- une structure porteuse,
- un premier arbre et une première roue,
- un deuxième arbre et une deuxième roue, l'axe de rotation de ce deuxième arbre étant au moins sensiblement parallèle à l'axe de rotation du premier arbre,
- au moins un organe de transmission sans fin enroulé sur lesdites roues,
- un premier palier guidant en rotation le premier arbre et fixé sur la structure porteuse,
- un deuxième palier guidant en rotation le deuxième arbre et lié à la structure porteuse au moyen d'une articulation d'axe géométrique au moins sensiblement parallèle à l'axe de rotation du deuxième arbre,
- un dispositif de montage/démontage et de réglage automatique de la tension dudit (desdits) organe(s) de transmission sans fin comportant notamment au moins un ressort à boudin et agissant sur le deuxième palier pour tendre ledit (lesdits) organes(s) de transmission sans fin.

Il est connu dans l'état de la technique une telle machine agricole selon FR 2 317 869 qui montre les caractéristiques du préambule des revendications 1 et 16 et comportant dans les grandes lignes une barre de coupe destinée à couper un produit sur pied et une bande d'andainage sans fin située à l'une des extrémités de ladite barre de coupe et destinée à transporter du produit coupé par ladite barre de coupe. Cette bande d'andainage est enroulée sur deux cylindres de guidage d'axe longitudinal sensiblement parallèle. La tension de la bande d'andainage sans fin est réglable au moyen d'un mécanisme de positionnement permettant à l'un des deux cylindres de se déplacer. A cet effet, le mécanisme de positionnement comporte un levier pivotant supportant à l'une de ses extrémités un desdits cylindres de guidage et soumis à l'autre de ses extrémités à l'action d'un ressort dont la pression est réglable avec un écrou. Ce ressort est essentiellement destiné à freiner l'écrou et permettre à amortir les éventuels à-coups de la bande d'andainage sans fin.

Pour assurer une bonne tension de la bande d'andainage l'opérateur agit sur l'écrou, lequel agit sur le ressort qui lui-même a tendance à faire pivoter le levier pivotant de manière à tendre la bande d'andainage sans fin. Un tel dispositif de réglage nécessite un contrôle fréquent et régulier de la tension de la bande d'andainage sans fin pour assurer un bon fonctionnement de cette dernière.

Il est encore connu dans l'état de la technique une machine agricole (DE 27 07 030) comportant deux poulies autour desquelles est enroulée une courroie munie d'éléments de coupe. Une des poulies est liée à un châssis au moyen d'une première liaison alors que l'autre poulie est liée à un ensemble mobile au moyen d'une deuxième liaison, ce dernier étant guidé dans ledit châssis. Entre le châssis et l'ensemble mobile sont prévues des rondelles élastiques destinées à écarter les deux poulies de manière à tendre la courroie. Cette machine agricole présente également un inconvénient. En effet, lorsque l'opérateur souhaite déposer la courroie, il faut qu'il rapproche les deux poulies, ce qui est une opération complexe du fait qu'il n'est prévu aucun dispositif permettant de réaliser une telle opération.

Pour sa part, un dispositif de réglage automatique de la tension d'un organe de transmission sans fin est connu par le document EP 0 291 254.

L'objet de la présente invention vise à remédier aux inconvénients de l'état de la technique.

L'objet de la présente invention vise donc à réaliser une machine de coupe dont le dispositif de transmission demande un minimum d'entretien permettant une éventuelle intervention rapide de l'opérateur pour changer les éléments d'usure par exemple et tout en garantissant un bon fonctionnement dudit dispositif de transmission dans la limite d'exploitation de celle-ci.

Un autre objet de la présente invention vise à réaliser une machine de coupe dont le dispositif de transmission est simple et peu onéreux.

Les objets de la présente invention sont atteints à l'aide d'un dispositif de montage/démontage et de réglage automatique de la tension d'au moins un organe de transmission sans fin d'une machine agricole selon la revendication 1.

L'invention concerne également les caractéristiques suivantes comme définies dans les revendications dépendantes:
- on utilise un (des) ressort(s) à boudin capable(s) de créer une tension dans l' (les) organe(s) de transmission sans fin qui atteint sa valeur limite quand ledit (lesdits) organe(s) de transmission sans fin a (ont) atteint sa (leur) valeur limite d'allongement ;
- le bras télescopique comporte en sus une tige filetée dont l'axe longitudinal s'étend parallèlement à l'axe longitudinal du bras télescopique, ladite tige filetée étant vissée dans l'une desdites parties de bras, tandis que l'autre partie de bras est guidée en translation sur ladite tige filetée suivant l'axe longitudinal de cette dernière, une butée limitant la translation de cette dernière partie de bras ;
- ladite butée est implantée sur la tige filetée ;
- il est prévu une autre butée sur la tige filetée qui limite le dévissage de la tige filetée de la partie de bras dans laquelle elle est vissée ;
- ladite autre butée est amovible ;
- la tige filetée est guidée dans la partie de bras dans laquelle elle est vissée au moyen d'un guidage long ;
- la tige filetée est vissée dans la partie de bras liée au deuxième palier ;
- le bras télescopique est lié au deuxième palier au moyen d'une articulation ;
- l'axe géométrique de ladite articulation est au moins sensiblement parallèle à l'axe de rotation du deuxième arbre ;
- le bras télescopique est lié à la structure porteuse au moyen d'une biellette pivotante ;
- le bras télescopique est lié à la biellette pivotante au moyen d'une articulation au moins sensiblement parallèle à l'axe de rotation du deuxième arbre et que ladite biellette pivotante est liée à la structure porteuse au moyen d'une articulation au moins sensiblement parallèle audit axe de rotation dudit deuxième arbre ;
- la biellette pivotante agit sur au moins un palier supplémentaire faisant partie d'une transmission sans fin de manière à régler automatiquement la tension de l' (des) organes(s) de transmission sans fin de ladite transmission sans fin ;
- le(s) ressort(s) à boudin est (sont) constitué(s) d'un (de) ressort(s) de compression et que le bras télescopique agit sur le deuxième palier par extension ;
- ledit (lesdits) organe(s) de transmission sans fin est (sont) constitué(s) par une (des) courroie(s), ladite première roue et ladite deuxième roue étant des poulies.

La présente invention concerne également les machines de coupe, de préférence les faucheuses munies ou non d'organes de traitement du produit fauché, selon la revendication 16.

D'autres objets, caractéristiques et avantages de l'invention apparaissent dans la description suivante avec références aux dessins annexés qui représentent, à titre d'exemples non limitatifs, une forme de réalisation d'une machine agricole utilisant le dispositif selon l'invention.

Sur ces dessins :
- la **figure 1** représente une faucheuse, en vue de dessus, comportant un dispositif de transmission et un dispositif pour la mise en oeuvre du procédé selon l'invention ;
- la **figure 2** représente, à une autre échelle, une vue suivant la flèche II, représentée sur la figure 1, montrant le dispositif de transmission et le dispositif pour la mise en oeuvre du procédé selon l'invention en position de travail selon une première forme de réalisation ;
- la **figure 3** représente un agrandissement partiel de la figure 2 montrant notamment le bras télescopique et le ressort à boudin du dispositif pour la mise en oeuvre du procédé selon l'invention ;
- la **figure 4** représente le dispositif de transmission et le dispositif pour la mise en oeuvre du procédé de la figure 2 en position d'intervention;
- la **figure 5** représente le dispositif de transmission et le dispositif pour la mise en oeuvre du procédé de la figure 2 dans une autre position de travail ;
- la figure 6 représente le dispositif de transmission et le dispositif pour la mise en oeuvre du procédé selon l'invention en position de travail selon une deuxième forme de réalisation.

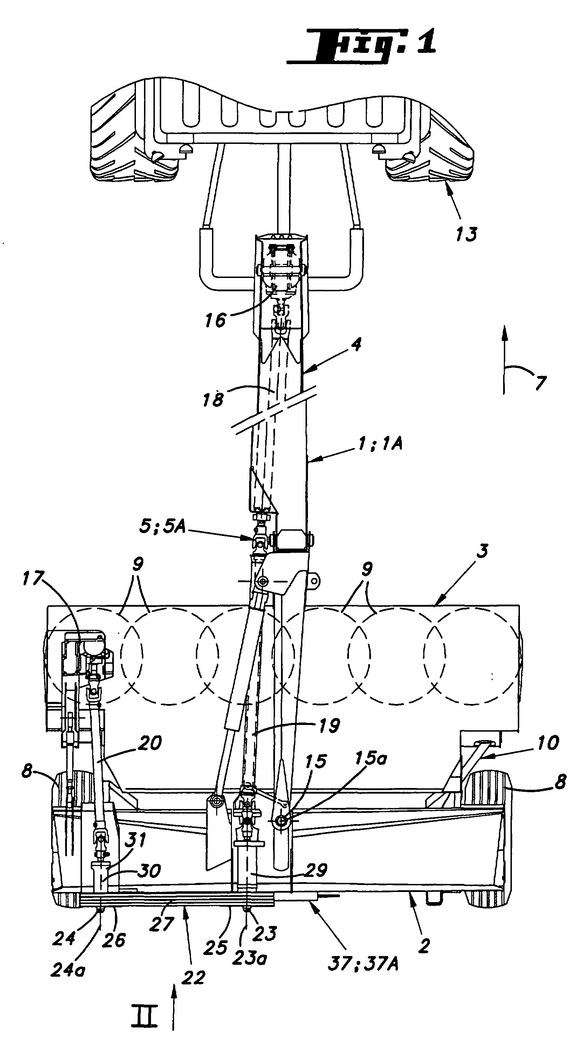

La machine de coupe (1) représentée sur la figure 1 est, selon l'exemple de réalisation représenté, une faucheuse qui comporte une structure porteuse (2), un mécanisme de coupe (3), un timon (4) et un dispositif de transmission (5).

Le châssis (2) s'étend, notamment en position de travail, transversalement à la direction d'avance (7) et comporte, selon l'exemple de réalisation représenté, deux roues (8) au moyen desquelles il peut être déplacé.

Dans la suite de la description, les notions suivantes "avant", "arrière", "devant" et derrière" sont définies par rapport au sens d'avance (7) indiqué par la flèche de la direction d'avance (7) et les notions "droite" et "gauche" sont définies en regardant la faucheuse (1), de l'arrière, dans le sens d'avance (7).

Le mécanisme de coupe (3) comporte des organes de coupe (9) représentés de manière schématique sur la figure 1, lesquels sont destinés à couper la récolte sur pied, et est suspendu de manière déplaçable à la structure porteuse (2) au moyen d'un dispositif de suspension (10).

Le timon (4) est, quant à lui, lié d'une part à un véhicule tracteur (13) d'une manière connue par l'homme du métier, et d'autre part à la structure porteuse (2) au moyen d'une première articulation (15) du type pivot d'axe géométrique (15a) au moins sensiblement vertical.

Le dispositif de transmission (5) permet d'entraîner à partir du véhicule tracteur (13) les organes de coupe (9) du mécanisme de coupe (3). Pour ce faire le dispositif de transmission (5) comporte, selon l'exemple de réalisation représenté, des boîtiers de transmission (16, 17), des arbres de transmission à joints universels (18, 19, 20), ainsi qu'une transmission sans fin (22).

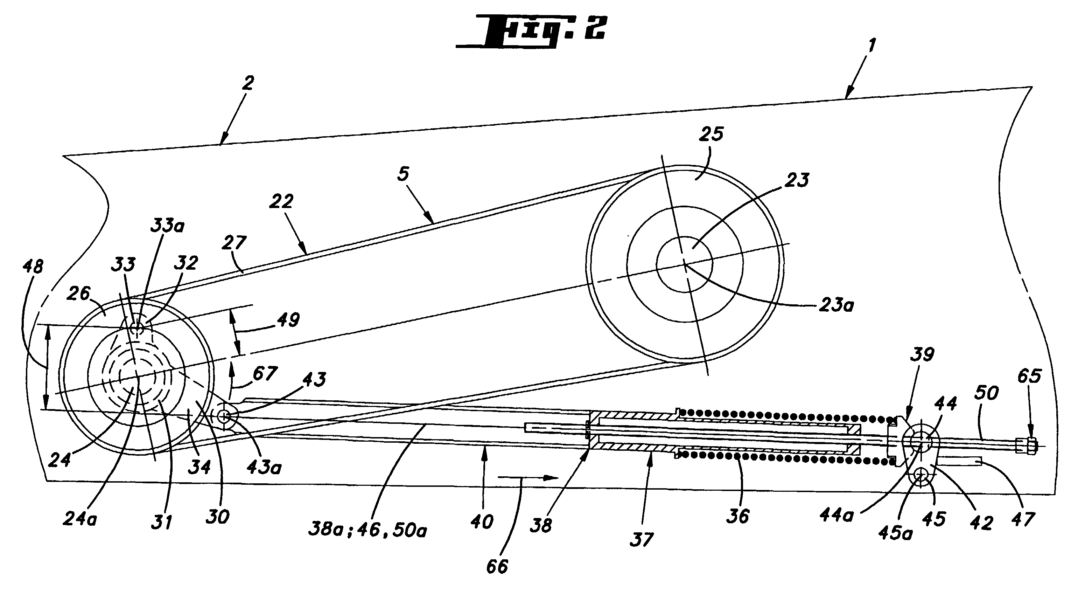

A la lumière des figures 2, 4 et 5 on voit que la transmission sans fin (22) comporte un premier arbre (23) d'axe de rotation (23a) au moins sensiblement horizontal et s'étendant suivant la direction d'avance (7) et un deuxième arbre (24) d'axe de rotation (24a) au moins sensiblement parallèle à l'axe de rotation (23a) dudit premier arbre (23). La transmission sans fin (22) comporte en outre une première roue (25), une deuxième roue (26) et des organes de transmission sans fin (27) enroulés sur lesdites roues (25, 26). Ces roues (25, 26) et ces organes de transmission sans fin (27) sont constitués, selon l'exemple de réalisation représenté, d'une première poulie (25), d'une deuxième poulie (26) et de courroies (27) enroulées sur lesdites poulies (25, 26).

La première poulie (25) est fixée sur le premier arbre (23) de manière coaxiale et la deuxième poulie (26) est fixée sur le deuxième arbre (24) également de manière coaxiale.

A la lumière de la figure 1, on voit en outre que le premier arbre (23) est guidé en rotation au moyen d'un premier palier (29) autour de son axe de rotation (23a), ledit premier palier (29) étant fixé sur la structure porteuse (2) de la faucheuse (1). Le deuxième arbre (24) est, quant à lui, guidé en rotation au moyen d'un deuxième palier (30) autour de son axe de rotation (24a). Ce deuxième palier (30) comporte, selon l'exemple de réalisation représenté, un fût principal (31) dans lequel est guidé en rotation le deuxième arbre (24), un premier bras (32) lié à la structure porteuse (2) au moyen d'une deuxième articulation (33), et un deuxième bras (34) sur lequel agit un ressort à boudin (36) qui fait partie d'un dispositif (37) de montage/démontage et de réglage automatique de la tension des courroies (27).

Le fût principal (31) s'étend sensiblement horizontalement suivant la direction d'avance (7) tandis que le premier bras (32) et le deuxième bras (34) s'étendent sensiblement radialement audit fût principal (31). La deuxième articulation (33) liant le premier bras (32) à la structure porteuse (2) est du type pivot et comporte un axe géométrique (33a) au moins sensiblement parallèle à l'axe de rotation (24a) du deuxième arbre (24).

Cette deuxième articulation (33) permet avantageusement au deuxième palier (30) de pivoter autour de l'axe géométrique (33a) de manière à rapprocher ou éloigner la deuxième poulie (26) de la première poulie (25) pour le montage ou le démontage des courroies (27). Pour ce faire, le dispositif (37) de montage/démontage et de réglage automatique de la tension des courroies (27) comporte en outre un bras télescopique (38) d'axe longitudinal (38a). Ce bras télescopique (38) comporte, selon l'exemple de réalisation représenté, une première partie de bras (39) et une deuxième partie de bras (40) guidées en translation l'une par rapport à l'autre et entre lesquelles agit le ressort à boudin (36). Ce ressort à boudin (36) est, selon l'exemple de réalisation représenté, constitué d'un ressort de compression qui a tendance à écarter les deux parties de bras (39, 40) l'une de l'autre de manière à ce que le bras télescopique (38) ait tendance à s'allonger. A la lumière des figures 2, 4 et 5 on voit que la première partie de bras (39) est liée à la structure porteuse (2) via une biellette pivotante (42) et que la deuxième partie de bras (40) est liée au deuxième bras (34) du deuxième palier (30) au moyen d'une troisième articulation (43) du type pivot et d'axe géométrique (43a) au moins sensiblement parallèle à l'axe de rotation (24a) du deuxième arbre (24).

La première partie de bras (39) du bras télescopique (38) prend appui sur la biellette pivotante (42) au moyen d'une quatrième articulation (44) du type pivot et d'axe géométrique (44a) au moins sensiblement parallèle à l'axe de rotation (24a) du deuxième arbre (24). La biellette pivotante (42) est d'une part liée, quant à elle, à la structure porteuse (2) au moyen d'une cinquième articulation (45) du type pivot et d'axe géométrique (45a) au moins sensiblement parallèle à l'axe de rotation (24a) du deuxième arbre (24) et prend d'autre part appui sur un arrêt (47) fixé à ladite structure porteuse (2).

Le ressort à boudin (36) a tendance à écarter les deux parties de bras (39, 40) l'une de l'autre suivant un axe géométrique (46) passant par l'axe géométrique (43a) de la troisième articulation (43) et l'axe géométrique (44a) de la quatrième articulation (44).

D'une manière particulièrement avantageuse, on remarquera que le dispositif (37) de montage/démontage et de réglage automatique de la tension des courroies (27) est implanté de telle manière que l'action du bras télescopique (38) engendrée par le ressort à boudin (36) suivant l'axe géométrique (46) agisse sur le deuxième palier (30) avec un premier bras de levier (48) par rapport à l'axe géométrique (33a) de la deuxième articulation (33).

L'action du bras télescopique (38) tend donc à faire pivoter le deuxième palier (30) autour de l'axe géométrique (33a) de la deuxième articulation (33) ce qui a pour effet d'éloigner la deuxième poulie (26) de la première poulie (25) avec un deuxième bras de levier (49) et de tendre les courroies (27).

Lorsque les courroies (27) s'allongent suite à leur usure, le deuxième palier (30) pivote autour de l'axe géométrique (33a) de la deuxième articulation (33) et le bras télescopique (38) ainsi que le ressort à boudin (36) s'allongent et la force développée par le ressort à boudin (36) diminue.

A cet effet, pour conserver une tension optimale des courroies (27), le bras télescopique (38), la première poulie (25), la deuxième poulie (26), la deuxième articulation (33) et la troisième articulation (43) sont agencées de manière à ce que le premier bras de levier (48) augmente au fur et à mesure que le deuxième palier (30) pivote autour de l'axe géométrique (33a) et que le deuxième bras de levier (49) diminue afin que la tension créée dans les courroies (27) soit suffisante dans la fourchette de valeurs admissibles pour l'allongement desdites courroies (27). Ce phénomène est parfaitement visible sur les figures 2, 4 et 5.

Pour ce faire, la troisième articulation (43) liant la deuxième partie de bras (40) du bras télescopique (38) au deuxième bras (34) du deuxième palier (30) est éloignée de l'axe géométrique (33a) de la deuxième articulation (33). On voit en outre que le deuxième arbre (24) portant la deuxième poulie (26) est éloigné de l'axe géométrique (33a) de la deuxième articulation (33).

On notera encore que le ressort à boudin (36) est dimensionné de manière à créer une tension dans les courroies (27) qui atteint sa valeur limite lorsque lesdites courroies (27) ont atteint leur valeur limite d'allongement. Lorsque cette valeur limite de tension des courroies (27) est atteinte, ces dernières patinent et n'assurent plus la transmission entre les deux poulies (24, 25) ce qui impose de changer lesdites courroies (27).

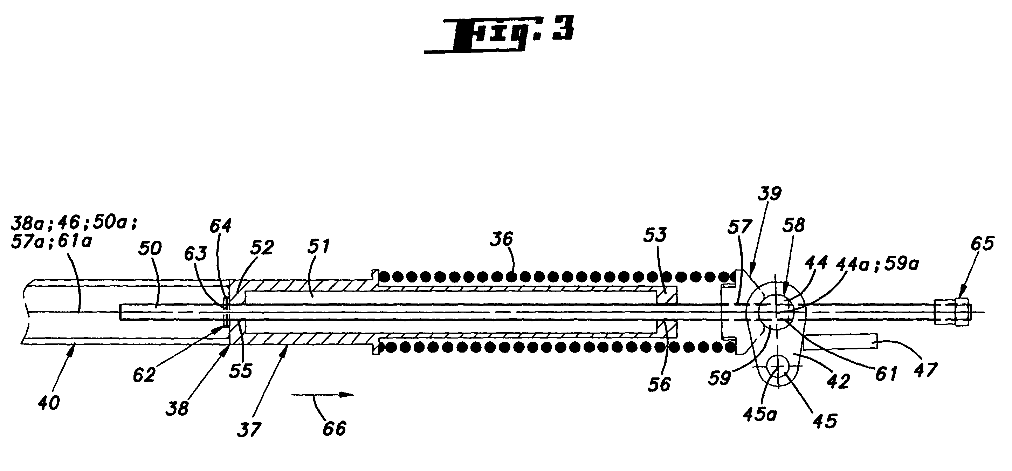

A la lumière de la figure 3, on voit que le bras télescopique (3 8) comporte en sus une tige filetée (50) d'axe longitudinal (50a) qui s'étend sensiblement parallèlement à l'axe longitudinal (38a) du bras télescopique (38). Cette tige filetée (50) est, d'une part vissée dans la deuxième partie de bras (40) qui est liée au deuxième palier (30) et d'autre part guidée en translation dans ladite deuxième partie de bras (40) au moyen d'un guidage long. En effet, à la lumière de la figure 3, on voit que la deuxième partie de bras (40) comporte, selon l'exemple de réalisation représenté, une partie creuse (51) comportant une première paroi latérale (52) située du côté de la troisième articulation (43) et une deuxième paroi latérale (53) située du côté de la première partie de bras (39).

Cette première paroi latérale (52) comporte un trou taraudé (55) dans lequel est vissée la tige filetée (50) alors que la deuxième paroi latérale (53) comporte un autre trou (56) au travers duquel s'étend ladite tige filetée (50).

La première partie de bras (39) est, quant à elle, guidée en translation sur la tige filetée (50) suivant l'axe longitudinal (50a) de cette dernière. A cet effet, la première partie de bras (39) comporte un trou longitudinal (57) d'axe longitudinal (57a) confondu avec l'axe longitudinal (50a) de la tige filetée (50) au travers duquel s'étend cette dernière.

Cette première partie de bras (39) prend d'une part appui sur le ressort à boudin (36) de manière à centrer celui-ci et d'autre part sur une butée (58) limitant la translation de ladite première partie de bras (39) par rapport à la tige filetée (50). Cette butée (58) est, selon l'exemple de réalisation représenté, composée d'un tourillon (59) d'axe longitudinal (59a) confondu avec l'axe géométrique (44a) de la quatrième articulation (44), ledit tourillon (59) faisant partie de cette dernière. On remarquera sur la figure 3 que le tourillon (59) comporte à cet effet un trou transversal (61) d'axe longitudinal (61a) au travers duquel s'étend de manière coulissante la tige filetée (50).

On remarquera encore sur la figure 3 que la butée (58) est implantée sur la tige filetée (50). A cet effet, le tourillon (59) comporte un trou transversal (61) d'axe longitudinal (61a) au travers duquel s'étend de manière coulissante la tige filetée (50).

On notera encore que le trou longitudinal (57) de la première partie de bras (39) et le trou transversal (61) sont au moins sensiblement concentriques et que leurs axes longitudinaux (57a ; 61a) sont au moins sensiblement confondus avec l'axe longitudinal (50a) de la tige filetée (50).

Pour éviter que la tige filetée (50) ne se désolidarise de la deuxième partie de bras (40), il est prévu une autre butée (62) sur ladite tige filetée (50) qui limite le dévissage de cette dernière du trou taraudé (55). A cet effet, selon l'exemple de réalisation représenté, la tige filetée (50) comporte un autre trou transversal (63) situé aux alentours de l'extrémité gauche de ladite tige filetée (50) (figures 2, 3, 4 et 5) et au travers duquel s'étend une goupille élastique (64) qui est destinée à buter contre la première paroi latérale (52). Cette autre butée (62) comporte la goupille élastique (64) et est en outre amovible de manière à autoriser le montage et le démontage de la tige filetée (50). En effet, comme son nom l'indique, la goupille élastique (64) peut être chassée de l'autre trou transversal (63) à laide de l'outillage approprié.

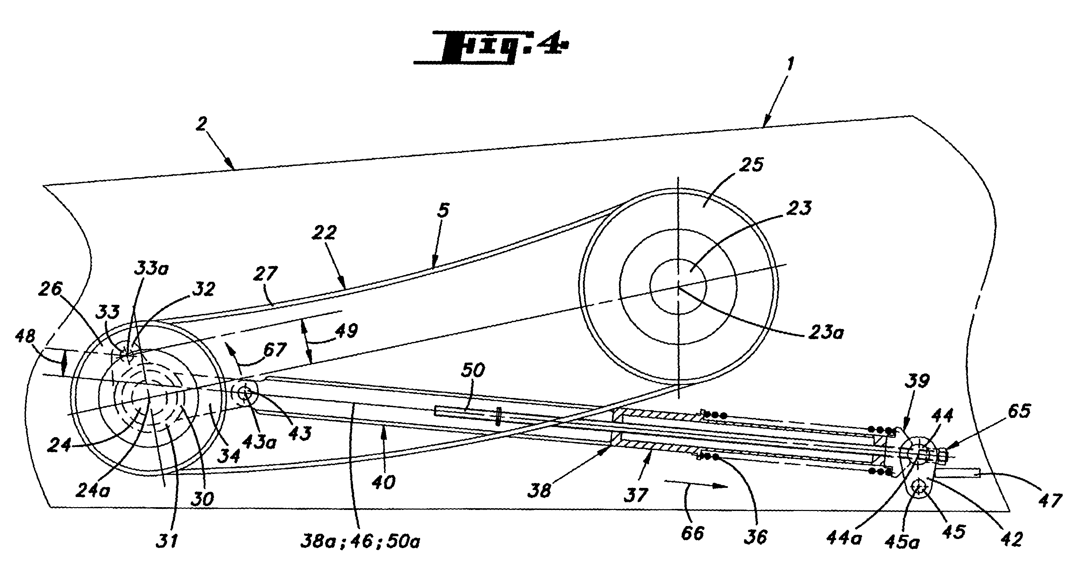

Le dispositif (37) de montage/démontage et de réglage automatique de la tension des courroies (27) fonctionne de la manière suivante. Pour monter les courroies (27), il faut rapprocher au maximum la deuxième poulie (26) de la première poulie (25) telles que représentées sur la figure 4. Pour ce faire, on tourne la tige filetée (50) dans le sens correspondant de manière à ce que l'extrémité (65), située à l'extrémité droite de ladite tige filetée (50) (figure 4), vienne en appui contre le tourillon (59) ce qui permet ensuite à la deuxième partie de bras (40) de se déplacer suivant une première flèche (66) jusqu'à ce que ladite deuxième partie de bras (40) vienne en butée sur la première partie de bras (39) tel que représenté sur la figure 4. A cet effet, le ressort à boudin (36) se bande et le deuxième palier (30) pivote autour de l'axe géométrique (33a) de la deuxième articulation (33) suivant une deuxième flèche (67).

Ensuite, on change les courroies (27) par-dessus les poulies (25, 26) et on relâche le ressort à boudin (36) en tournant la tige filetée (50) dans le sens inverse ce qui permet d'éloigner la deuxième poulie (26) de la première poulie (25) par pivotement autour de l'axe géométrique (33a) suivant le sens inverse à la deuxième flèche (67) sous l'effet dudit ressort à boudin (36). A cet effet, la deuxième partie de bras (40) se déplace dans le sens inverse à la première flèche (66) jusqu'à ce que les courroies (27) aient atteint leurs tensions normales de fonctionnement sous l'effet du ressort à boudin (36). L'opérateur continu ensuite de tourner la tige filetée (50) de manière à ce que l'extrémité (65) de ladite tige filetée (50) se décolle du tourillon (59) jusqu'à ce que la goupille élastique (64) vienne en appui contre la première paroi latérale (52) de la deuxième partie de bras (40) tel que représenté sur la figure 2.

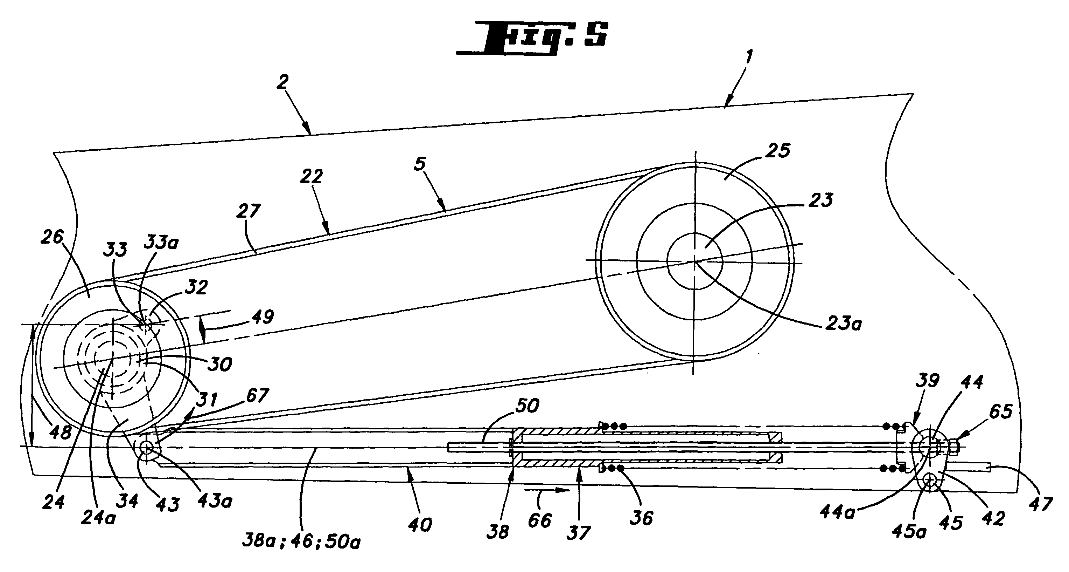

Au fur et à mesure que les courroies (27) s'usent et se fatiguent, elles s'allongent. De ce fait, le ressort à boudin (36) s'allonge et la tige filetée (50) coulisse dans le trou transversal (61) du tourillon (59) et le trou longitudinal (57) de la première partie de bras (39) jusqu'à ce que l'extrémité (65) de la tige filetée (50) vienne en appui contre ledit tourillon (59) (figure 5). A ce moment là, le ressort à boudin (36) n'a plus aucun effet sur la deuxième partie de bras (40) et donc la tension des courroies (27) n'est plus assurée ce qui se traduit par un patinage desdites courroies (27) et une transmission sans fin (22) hors d'usage. A ce stade d'usure des courroies (27), un remplacement de ces dernières s'impose comme décrit ci-dessus.

On remarquera que ce dispositif (37) de montage/démontage et de réglage automatique de la tension des courroies (27) ne demande pratiquement aucun entretien entre le montage desdites courroies (27) et leur démontage lorsqu'elles sont usées.

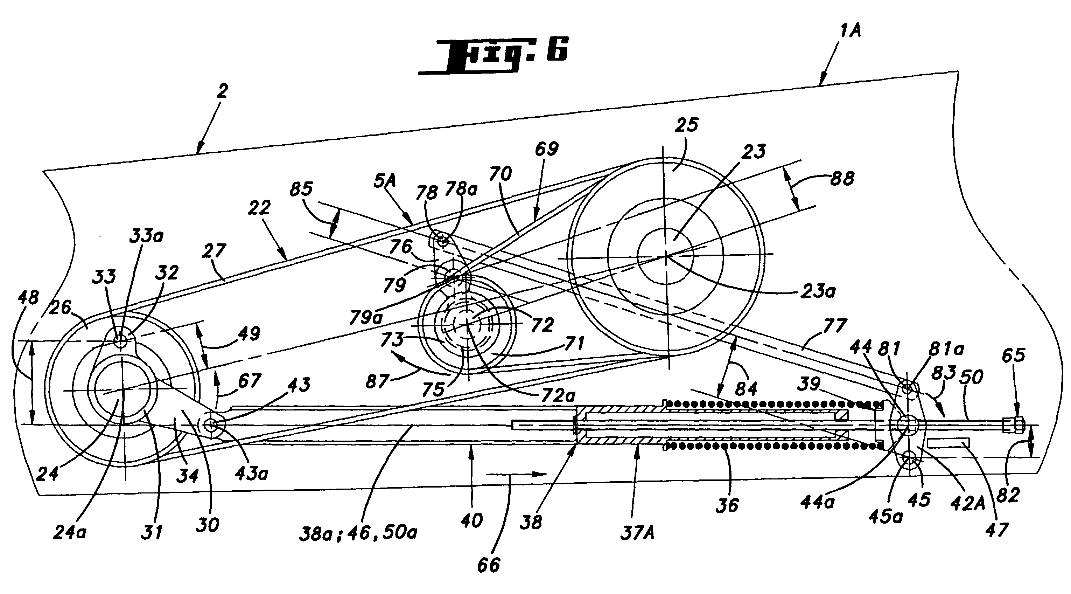

La figure 6 représente le dispositif de transmission (5A) et le dispositif pour la mise en oeuvre du procédé selon l'invention en position de travail selon une deuxième forme de réalisation. Ce dispositif de transmission (5A) comporte un certain nombre d'éléments qui ont été décrits précédemment. Ces éléments garderont par conséquent le même numéro de repère et ne seront pas redécrits. Ils comportent également un certain nombre d'éléments qui sont comparables à des éléments du dispositif de transmission (5) suivit de la lettre A. Ils ne seront décrits que si cela s'avère nécessaire.

Le dispositif de transmission (5A) selon ce deuxième exemple de réalisation comporte en sus une deuxième transmission sans fin (69) comprenant une autre courroie (70) et une troisième poulie (71). Cette autre courroie (70) est enroulée, selon l'exemple de réalisation représenté, sur la troisième poulie (71) et la première poulie (25). La troisième poulie (71) est fixée de manière coaxiale sur un troisième arbre (72) d'axe de rotation (72a) au moins sensiblement parallèle à l'axe de rotation (23a) du premier arbre (23). A la lumière de la figure 6, on voit en outre que le troisième arbre (72) est guidé en rotation au moyen d'un troisième palier (73). Ce troisième palier (73) comporte un autre fût (75) dans lequel est guidé en rotation le troisième arbre (72) et un troisième bras (76) à l'extrémité extérieure duquel est liée une bielle (77) au moyen d'une liaison (78) du type pivot et d'axe longitudinal (78a) au moins sensiblement parallèle à l'axe de rotation (72a). Ce troisième palier (73) est, selon l'exemple de réalisation représenté, lié à la structure porteuse (2) au moyen d'une sixième articulation (79) du type pivot et d'axe longitudinal (79a) au moins sensiblement parallèle à l'axe de rotation (23a) du premier arbre (23). On notera encore que la sixième articulation (79) est située entre le troisième arbre (72) et la liaison (78) ce qui permet au troisième palier (73) de faire bras de levier pour tendre l'autre courroie (70) de la même manière que celle décrite auparavant. A cet effet, on remarquera que la bielle (77) est également liée à la biellette pivotante (42A) au moyen d'une septième articulation (81) du type pivot et d'axe géométrique (81a) au moins sensiblement parallèle à l'axe géométrique (45a) de la cinquième articulation (45).

D'une manière particulièrement avantageuse, on remarquera que la bielle (77), le troisième palier (73) et la biellette pivotante (42) sont agencés de manière à ce que l'action du bras télescopique (38) agit sur ladite biellette pivotante (42A) avec un troisième bras de levier (82) par rapport à l'axe géométrique (45a) de la cinquième articulation (45). L'action du bras télescopique (38) tend donc à faire pivoter la biellette pivotante (42) autour de l'axe géométrique (45a) de la cinquième articulation (45) suivant une troisième flèche (83) et permet d'agir sur la bielle (77) avec un quatrième bras de levier (84) tel que représenté sur la figure 6. A cet effet, l'autre courroie (70) est tendue au moyen de la bielle (77) qui tire sur le troisième palier (73) avec un cinquième bras de levier (85). Ce troisième palier (73) tend à pivoter autour de l'axe longitudinal (79a) de la sixième articulation (79) suivant une quatrième flèche (87) et permet donc d'éloigner la troisième poulie (71) de la première poulie (25) avec un sixième bras de levier (88).

Les bras de levier (82, 84, 85, 88) de cette deuxième transmission sans fin (69) sont dimensionnés de telle sorte que, lorsque l'autre courroie (70) s'allonge et que la force développée par le ressort à boudin (36) diminue, la tension créée dans ladite autre courroie (70) soit suffisante dans la fourchette de valeurs admissibles pour l'allongement de ladite autre courroie (27).

Selon cette deuxième forme de réalisation, la biellette pivotante (42A) est commandée par le bras télescopique (38) et agit sur l'autre courroie (70) via la bielle (77), le troisième palier (73) et la troisième poulie (71) de manière à régler en sus automatiquement la tension de ladite autre courroie (70).

Au fur et à mesure que l'autre courroie (70) s'use et se fatigue, elle s'allonge. De ce fait le ressort à boudin (36) et le bras télescopique (38) se comporte de la même manière de celle décrite précédemment. Lorsque la tension de l'autre courroie (70) n'est plus assurée, l'opérateur agit sur la tige filetée (50) de la même manière que celle décrite précédemment pour remplacer l'autre courroie (70) et éventuellement les courroies (27). En effet, en agissant sur la tige filetée (50), le ressort à boudin (36) n'agit plus sur la biellette pivotante (42A) et la deuxième poulie (26) tout comme la troisième poulie (71) peuvent être rapprochées de la première poulie (25) en vue du remplacement des courroies (27 ; 70). Ainsi, avec un seul ressort à boudin (36) et un seul bras télescopique (38) on arrive à régler automatiquement la tension des courroies (27 ; 70) de deux transmissions sans fin (22 ; 69) et assurer le montage et le démontage desdites courroies (27 ; 70) pratiquement sans aucun entretien entre ledit montage et ledit démontage.

A la lumière de la figure 6, on voit encore que dans cette position normale de travail, la biellette pivotante (42A) ne prend pas appui sur l'arrêt (47).

On notera encore que le ressort à boudin (36) selon ces deux formes de réalisation permet en sus d'amortir les à-coups des courroies (27 ; 70) des transmissions (22 ; 69).

Finalement diverses modifications peuvent être apportées aux exemples qui viennent d'être décrits, notamment en ce qui concerne la constitution des divers éléments ou pas substitution d'équivalents techniques, sans pour autant sortir du domaine de protection.

C'est ainsi qu'il est par exemple possible d'équiper la faucheuse (1 ; 1A) d'un dispositif de traitement de fourrage muni d'organes de traitement destinés à traiter le produit fauché par les organes de coupe (9) du mécanisme de coupe (3).

Il est également parfaitement possible d'équiper la faucheuse (1 ; 1A) de plusieurs dispositifs de transmission comportant chacun un dispositif de transmission sans fin, chacun pouvant alors être commandé par un seul dispositif (37) de montage/démontage et de réglage automatique de la tension des organes de transmission sans fin du dispositif de transmission sans fin.

## Revendications

1. Dispositif (37 ; 37A) de montage/démontage et de réglage automatique de la tension d'au moins un organe de transmission sans fin (27 ; 70) d'une machine agricole munie d'une structure porteuse (2), qui comporte par ailleurs :
- un premier arbre (23) et une première roue (25),
- un deuxième arbre (24) et une deuxième roue (26), l'axe de rotation (24a) de ce deuxième arbre (24) étant au moins sensiblement parallèle à l'axe de rotation (23a) du premier arbre (23),
- au moins un organe de transmission sans fin (27 ; 70) enroulé sur lesdites roues (25 ; 26),
- un premier palier (29) guidant en rotation le premier arbre (23) et fixé sur la structure porteuse (2),
- un deuxième palier (30) guidant en rotation le deuxième arbre (24) et lié à la structure porteuse (2) au moyen d'une articulation (33) d'axe géométrique (33a) au moins sensiblement parallèle à l'axe de rotation (24a) du deuxième arbre (24),
ledit dispositif (37 ; 37A) de montage/démontage et de réglage automatique de la tension d'au moins un organe de transmission sans fin (27 ; 70) comportant notamment au moins un ressort à boudin (36) et agissant sur le deuxième palier (30) pour tendre ledit organe de transmission sans fin (27 ; 70),
***caractérisé en ce* que** le dispositif (37 ; 37A) de montage/démontage et de réglage automatique de la tension d'au moins un organe de transmission sans fin (27 ; 70) comporte en sus un bras télescopique (38) comportant une première partie de bras (39) et une deuxième partie de bras (40) guidées en translation l'une par rapport à l'autre et entre lesquelles agit au moins un ressort à boudin (36), la première partie de bras (39) étant liée à la structure porteuse (2) et la deuxième partie de bras (40) étant liée au deuxième palier (30) en un point de liaison (43) éloigné de l'axe géométrique (33a) de l'articulation (33) liant le deuxième palier (30) à la structure porteuse (2), de telle manière que ledit bras télescopique (38) agisse sur le deuxième palier (30) avec un bras de levier (48) qui augmente au fur et à mesure qu'au moins un ressort à boudin (36) se détend afin que la tension créée dans ledit au moins un organe de transmission sans fin (27 ; 70) soit suffisante dans la fourchette des valeurs admissibles pour l'allongement dudit organe de transmission sans fin (27 ; 70).

2. Dispositif selon la revendication 1, ***caractérisé en ce* qu'**au moins un ressort à boudin (36) est dimensionné de manière à créer dans au moins un organe de transmission sans fin (27 ; 70) une tension qui atteint sa valeur limite quand ledit organe de transmission sans fin (27 ; 70) a atteint sa valeur limite d'allongement.

3. Dispositif selon la revendication 1 ou 2, ***caractérisé en ce* que** le bras télescopique (38) comporte en sus une tige filetée (50) dont l'axe longitudinal (50a) s'étend parallèlement à l'axe longitudinal (38a) du bras télescopique (38), ladite tige filetée (50) étant vissée dans l'une desdites parties de bras (39 ; 40), tandis que l'autre partie de bras (39 ; 40) est guidée en translation sur ladite tige filetée (50) suivant l'axe longitudinal (50a) de cette dernière, une butée (58) limitant la translation de cette dernière partie de bras (39 ; 40).

4. Dispositif selon la revendication 3, ***caractérisé en ce* que** ladite butée (58) est implantée sur la tige filetée (50).

5. Dispositif selon la revendication 3 ou 4, ***caractérisé en ce* qu'**il est prévu une autre butée (62) sur la tige filetée (50) qui limite le dévissage de la tige filetée (50) de la partie de bras (39 ; 40) dans laquelle elle est vissée.

6. Dispositif selon la revendication 5, ***caractérisé en ce* que** ladite autre butée (62) est amovible.

7. Dispositif selon l'une quelconque des revendications 3 à 6, ***caractérisé en ce* que** la tige filetée (50) est guidée dans la partie de bras (39 ; 40) dans laquelle elle est vissée au moyen d'un guidage long.

8. Dispositif selon l'une quelconque des revendications 3 à 7, ***caractérisé en ce* que** la tige filetée (50) est vissée dans la partie de bras (39 ; 40) liée au deuxième palier (30).

9. Dispositif selon l'une quelconque des revendications 1 à 8, ***caractérisé en ce* que** le bras télescopique (38) est lié au deuxième palier (30) au moyen d'une articulation (43).

10. Dispositif selon la revendication 9, ***caractérisé en ce* que** l'axe géométrique (43a) de ladite articulation (43) est au moins sensiblement parallèle à l'axe de rotation (24a) du deuxième arbre (24).

11. Dispositif selon l'une quelconque des revendications 1 à 10, ***caractérisé en ce* que** le bras télescopique (38) est lié à la structure porteuse (2) au moyen d'une biellette pivotante (42 ; 42A).

12. Dispositif selon la revendication 11, ***caractérisé en ce* que** le bras télescopique (38) est lié à la biellette pivotante (42 ; 42A) au moyen d'une articulation (44) au moins sensiblement parallèle à l'axe de rotation (24a) du deuxième arbre (24) et que ladite biellette pivotante (42 ; 42A) est liée à la structure porteuse (2) au moyen d'une articulation (45) au moins sensiblement parallèle audit axe de rotation (24a) dudit deuxième arbre (24).

13. Dispositif selon la revendication 11 ou 12, ***caractérisé en ce* que** la biellette pivotante (42 ; 42A) agit sur au moins un palier supplémentaire (73) faisant partie d'une transmission sans fin (69) de manière à régler automatiquement la tension dudit organe de transmission sans fin (70) de ladite transmission sans fin (69).

14. Dispositif selon l'une quelconque des revendications 1 à 13, ***caractérisé en* ce qu'**au moins un ressort à boudin (36) est constitué d'un ressort de compression et que le bras télescopique (38) agit sur le deuxième palier (30) par extension.

15. Dispositif selon l'une quelconque des revendications 1 à 14, ***caractérisé en ce* qu'**au moins un organe de transmission sans fin (27 ; 70) est constitué par une courroie (27 ; 70), ladite première roue (25) et ladite deuxième roue (26) étant des poulies (25 ; 26).

16. Machine agricole comportant:
- une structure porteuse (2),
- un dispositif (37 ; 37A) de montage/démontage et de réglage automatique de la tension d'au moins un organe de transmission sans fin (27 ; 70) selon l'une quelconque des revendications 1 à 15.

17. Machine agricole selon la revendication 16, ***caractérisée en ce* que** c'est une machine de coupe (1 ; 1A).

18. Machine agricole selon la revendication 17, ***caractérisée en ce* que** c'est une faucheuse (1 ; 1A) munie ou non d'organes de traitement du produit fauché.

## Claims

1. Device (37; 37A) for the mounting/dismounting and automatic tension adjustment of at least one endless transmission element (27; 70) of an agricultural machine equipped with a bearing structure (2), which moreover comprises:
- a first shaft (23) and a first wheel (25),
- a second shaft (24) and a second wheel (26), the axis of rotation (24a) of this second shaft (24) being at least approximately parallel to the axis of rotation (23a) of the first shaft (23),
- at least one endless transmission element (27; 70) wrapped around the said wheels (25; 26),
- a first bearing (29) guiding the first shaft (23) in rotation and fixed to the bearing structure (2),
- a second bearing (30) guiding the second shaft (24) in rotation and connected to the bearing structure (2) by means of an articulation (33), the geometric axis (33a) of which is at least approximately parallel to the axis of rotation (24a) of the second shaft (24),
the said device (37; 37A) for the mounting/dismounting and automatic tension adjustment of at least one endless transmission element (27; 70) comprising, in particular, at least one coil spring (36) and acting on the second bearing (30) so as to tension the said endless transmission element (27; 70),
***characterized in* that** the device (37; 37A) for the mounting/dismounting and automatic tension adjustment of at least one endless transmission element (27; 70) additionally comprises a telescopic arm (38) comprising a first arm part (39) and a second arm part (40) which are guided in translation one with respect to the other and between which at least one coil spring (36) acts, the first arm part (39) being connected to the bearing structure (2) and the second arm part (40) being connected to the second bearing (30) at a connection point (43) away from the geometric axis (33a) of the articulation (33) connecting the second bearing (30) to the bearing structure (2), in such a way that the said telescopic arm (38) acts on the second bearing (30) with a lever arm (48) which increases as at least one coil spring (36) relaxes so that the tension created in the said at least one endless transmission element (27; 70) is high enough in the range of permissible values for the elongation of the said endless transmission element (27; 70).

2. Device according to Claim 1, ***characterized in* that** at least one coil spring (36) is sized so that it creates in at least one endless transmission element (27; 70) tension which reaches its limit value when the said endless transmission element (27; 70) has reached its limit value of elongation.

3. Device according to Claim 1 or 2, ***characterized in* that** the telescopic arm (38) additionally comprises a threaded rod (50), the longitudinal axis (50a) of which runs parallel to the longitudinal axis (38a) of the telescopic arm (38), the said threaded rod (50) being screwed into one of the said arm parts (39; 40), while the other arm part (39; 40) is guided in translation on the said threaded rod (50) along the longitudinal axis (50a) thereof, a stop (58) limiting the translational movement of the latter arm part (39; 40).

4. Device according to Claim 3, ***characterized in* that** the said stop (58) is fitted on the threaded rod (50).

5. Device according to Claim 3 or 4, ***characterized in* that** there is another stop (62) on the threaded rod (50) which limits the extent to which the threaded rod (50) can be unscrewed from the arm part (39; 40) into which it is screwed.

6. Device according to Claim 5, ***characterized in* that** the said other stop (62) is removable.

7. Device according to any one of Claims 3 to 6, ***characterized in* that** the threaded rod (50) is guided in the arm part (39; 40) into which it is screwed, by means of a long guide.

8. Device according to any one of Claims 3 to 7, ***characterized in* that** the threaded rod (50) is screwed into the arm part (39; 40) connected to the second bearing (30).

9. Device according to any one of Claims 1 to 8, ***characterized in* that** the telescopic arm (38) is connected to the second bearing (30) by means of an articulation (43).

10. Device according to Claim 9, ***characterized in* that** the geometric axis (43a) of the said articulation (43) is at least approximately parallel to the axis of rotation (24a) of the second shaft (24).

11. Device according to any one of Claims 1 to 10, ***characterized in* that** the telescopic arm (38) is connected to the bearing structure (2) by means of a pivoting link (42; 42A).

12. Device according to Claim 11, ***characterized in* that** the telescopic arm (38) is connected to the pivoting link (42; 42A) by means of an articulation (44) at least approximately parallel to the axis of rotation (24a) of the second shaft (24) and **in that** the said pivoting link (42; 42A) is connected to the bearing structure (2) by means of an articulation (45) at least approximately parallel to the said axis of rotation (24a) of the said second shaft (24).

13. Device according to Claim 11 or 12, ***characterized in* that** the pivoting link (42; 42A) acts on at least one additional bearing (73) forming part of an endless transmission (69) so as to automatically adjust the tension in the said endless transmission element (70) of the said endless transmission (69).

14. Device according to any one of Claims 1 to 13, ***characterized in* that** at least one coil spring (36) consists of a compression spring and **in that** the telescopic arm (38) acts on the second bearing (30) by extension.

15. Device according to any one of Claims 1 to 14, ***characterized in* that** at least one endless transmission element (27; 70) consists of a belt (27; 70), the said first wheel (25) and the said second wheel (26) being pulleys (25; 26).

16. Agricultural machine comprising:
- a bearing structure (2),
- a device (37; 37A) for the mounting/dismounting and automatic tension adjustment of at least one endless transmission element (27; 70) according to any one of Claims 1 to 15.

17. Agricultural machine according to Claim 16, ***characterized in* that** the machine is a cutting machine (1; 1A).

18. Agricultural machine according to Claim 17, ***characterized in* that** the machine is a mower (1; 1A) which may or may not be equipped with elements for treating the mown product.

## Patentansprüche

1. Vorrichtung (37; 37A) zur Montage/Demontage und automatischen Einstellung der Spannung von mindestens einem Endlosübertragungselement (27; 70) einer Landmaschine, die mit einem Traggestell (2) versehen ist, und überdies
- eine erste Welle (23) und ein erstes Rad (25),
- eine zweite Welle (24) und ein zweites Rad (26), wobei die Drehachse (24a) dieser zweiten Welle (24) zumindest im Wesentlichen zur Drehachse (23a) der ersten Welle (23) parallel ist,
- mindestens ein Endlosübertragungselement (27; 70), das auf die Räder (25; 26) aufgewickelt ist;
- ein erstes Lager (29), das die erste Welle (23) in Drehung versetzt und auf dem Traggestell (2) befestigt ist;
- ein zweites Lager (30), das die zweite Welle (24) in Drehung versetzt und mit dem Traggestell (2) mittels eines Gelenks (33) mit einer zumindest im Wesentlichen zur Drehachse (24a) der zweiten Welle (24) parallelen geometrischen Achse (33a) verbunden ist
umfasst, wobei die Vorrichtung (37; 37A) zur Montage/Demontage und automatischen Einstellung der Spannung von mindestens einem Endlosübertragungselement (27; 70) insbesondere mindestens eine Schraubenfeder (36) umfasst und auf das zweite Lager (30) einwirkt, um das Endlosübertragungselement (27; 70) zu spannen,
***dadurch gekennzeichnet,* dass** die Vorrichtung (37; 37A) zur Montage/Demontage und automatischen Einstellung der Spannung von mindestens einem Endlosübertragungselement (27; 70) zusätzlich einen Teleskoparm (38) umfasst, der einen ersten Armteil (39) und einen zweiten Armteil (40) umfasst, die in Translation zueinander geführt werden und zwischen denen mindestens eine Schraubenfeder (36) einwirkt, wobei der erste Armteil (39) mit dem Traggestell (2) und der zweite Armteil (40) mit dem zweiten Lager (30) an einem Verbindungspunkt (43) verbunden ist, der von der geometrischen Achse (33a) des Gelenks (33), das das zweite Lager (30) mit dem Traggestell (2) verbindet, entfernt ist, so dass der Teleskoparm (38) auf das zweite Lager (30) mit einem Hebelarm (48) einwirkt, der in dem Maße wie sich zumindest eine Schraubenfeder (36) entspannt, größer wird, damit die in mindestens einem Endlosübertragungselement (27; 70) erzeugte Spannung in dem zulässigen Wertebereich für die Dehnung des Endlosübertragungselements (27; 70) ausreichend ist.

2. Vorrichtung nach Anspruch 1, ***dadurch gekennzeichnet,* dass** mindestens eine Schraubenfeder (36) derart dimensioniert ist, dass in mindestens einem Endlosübertragungselement (27; 70) eine Spannung erzeugt wird, die ihren Grenzwert erreicht, wenn das Endlosübertragungselement (27; 70) seinen Dehnungsgrenzwert erreicht hat.

3. Vorrichtung nach Anspruch 1 oder 2, ***dadurch gekennzeichnet,* dass** der Teleskoparm (38) zusätzlich eine Gewindestange (50) umfasst, deren Längsachse (50a) sich parallel zur Längsachse (38a) des Teleskoparms (38) erstreckt, wobei die Gewindestange (50) in einen der Armteile (39; 40) geschraubt ist, während der andere Armteil (39; 40) in Translation auf der Gewindestange (50) entlang ihrer Längsachse (50a) geführt wird, wobei ein Anschlag (58) die Translation dieses letztgenannten Armteils (39; 40) begrenzt.

4. Vorrichtung nach Anspruch 3, ***dadurch gekennzeichnet,* dass** der Anschlag (58) auf die Gewindestange (50) gesetzt ist.

5. Vorrichtung nach Anspruch 3 oder 4, ***dadurch gekennzeichnet,* dass** ein weiterer Anschlag (62) auf der Gewindestange (50) vorgesehen ist, der das Losschrauben der Gewindestange (50) von dem Armteil (39; 40), in den sie geschraubt ist, begrenzt.

6. Vorrichtung nach Anspruch 5, ***dadurch gekennzeichnet,* dass** der andere Anschlag (62) abnehmbar ist.

7. Vorrichtung nach irgend einem der Ansprüche 3 bis 6, ***dadurch gekennzeichnet,* dass** die Gewindestange (50) in dem Armteil (39; 40), in den sie geschraubt ist, mit einer Langführung geführt wird.

8. Vorrichtung nach irgend einem der Ansprüche 3 bis 7, ***dadurch gekennzeichnet,* dass** die Gewindestange (50) in den mit dem zweiten Lager (30) verbundenen Armteil (39; 40) geschraubt ist.

9. Vorrichtung nach irgend einem der Ansprüche 1 bis 8, ***dadurch gekennzeichnet,* dass** der Teleskoparm (38) mit dem zweiten Lager (30) mittels eines Gelenks (43) verbunden ist.

10. Vorrichtung nach Anspruch 9, ***dadurch gekennzeichnet,* dass** die geometrische Achse (43a) des Gelenks (43) zumindest im Wesentlichen zur Drehachse (24a) der zweiten Welle (24) parallel ist.

11. Vorrichtung nach irgend einem der Ansprüche 1 bis 10, ***dadurch gekennzeichnet,* dass** der Teleskoparm (38) mit dem Traggestell (2) mit Hilfe einer Kröpfradschwinge (42; 42A) verbunden ist.

12. Vorrichtung nach Anspruch 11, ***dadurch gekennzeichnet,* dass** der Teleskoparm (38) mit der Kröpfradschwinge (42; 42A) mit Hilfe eines Gelenks (44) verbunden ist, das zumindest im Wesentlichen zur Drehachse (24a) der zweiten Welle (24) parallel ist, und dass die Kröpfradschwinge (42; 42A) mit dem Traggestell (2) mit Hilfe eines zumindest im Wesentlichen zur Drehachse (24a) der zweiten Welle (24) parallelen Gelenks (45) verbunden ist.

13. Vorrichtung nach Anspruch 11 oder 12, ***dadurch gekennzeichnet,* dass** die Kröpfradschwinge (42; 42A) auf mindestens ein zusätzliches Lager (73) einwirkt, das Teil einer Endlosübertragung (69) ist, um die Spannung des Endlosübertragungselements (70) der Endlosübertragung (69) automatisch einzustellen.

14. Vorrichtung nach irgend einem der Ansprüche 1 bis 13, ***dadurch gekennzeichnet,* dass** mindestens eine Schraubenfeder (36) von einer Druckfeder gebildet ist und dass der Teleskoparm (38) auf das zweite Lager (30) durch Ausdehnung einwirkt.

15. Vorrichtung nach irgend einem der Ansprüche 1 bis 14, ***dadurch gekennzeichnet,* dass** mindestens ein Endlosübertragungselement (27; 70) von einem Riemen (27; 70) gebildet ist, wobei das erste Rad (25) und das zweite Rad (26) Rollen (25; 26) sind.

16. Landmaschine, die
- ein Traggestell (2),
- eine Vorrichtung (37; 37A) zur Montage/Demontage und automatischen Einstellung der Spannung von mindestens einem Endlosübertragungselement (27; 70)
umfasst, nach irgend einem der Ansprüche 1 bis 15.

17. Landmaschine nach Anspruch 16, ***dadurch gekennzeichnet,* dass** es sich um eine Schneidemaschine (1; 1A) handelt.

18. Landmaschine nach Anspruch 17, ***dadurch gekennzeichnet,* dass** es sich um eine Mähmaschine (1; 1A) handelt, die gegebenenfalls mit Elementen zur Behandlung des Mähproduktes ausgestattet ist.
